(19) Europäisches Patentamt
European Patent Office
Office européen des brevets

(11) **EP 1 309 062 A2**

(12) **EUROPEAN PATENT APPLICATION**

(43) Date of publication:
07.05.2003 Bulletin 2003/19

(51) Int Cl.⁷: **H02J 3/00**

(21) Application number: 02253862.3

(22) Date of filing: 31.05.2002

| | |
|---|---|
| (84) Designated Contracting States: **AT BE CH CY DE DK ES FI FR GB GR IE IT LI LU MC NL PT SE TR** Designated Extension States: **AL LT LV MK RO SI** | (72) Inventor: **Seem, John E.** Glendale, Wisconsin 53209 (US) |
| (30) Priority: **30.10.2001 US 21382** | (74) Representative: **Dealtry, Brian et al** Eric Potter Clarkson, Park View House, 58 The Ropewalk Nottingham NG1 5DD (GB) |
| (71) Applicant: **Johnson Controls Technology Company** Plymouth, Michigan 48170 (US) | |

(54) **Apparatus and method for determining days of the week with similar utility consumption profiles**

(57) A method and apparatus for determining days of the week with similar consumption of energy or utility by a computerized system utilizes a pattern recognition algorithm. The algorithm utilizes a time series of energy or utility use data spanning a plurality of days to generate at least one feature of interest for each day. The features of interest may be any or all of average daily utility consumption, maximum utility use during a predefined time interval for the day, minimum utility use over the predefined time interval for the day, and the like. The algorithm transforms the at least one feature of interest for each day to remove the effects of any seasonal variation that may be present in the time series data. The features of interest are then grouped by day of the week to define seven clusters. The algorithm next performs an outlier analysis for each feature of interest in each of the seven clusters to identify and remove any abnormal data. The seven clusters are then analyzed using an modified agglomerative hierarchical clustering method to determine days of the week with similar utility consumption profiles.

FIG. 1

EP 1 309 062 A2

**Description**

**FIELD OF THE INVENTION**

The present invention relates to analyzing consumption of utilities, such as electricity, natural gas and water, and more particularly to using time series of energy or other utility to determine the days of the week with similar consumption profiles as other days of the week.

**BACKGROUND OF THE INVENTION**

Large buildings often incorporate computerized control systems which manage the operation of different subsystems, such as for heating, ventilation and air conditioning. In addition to ensuring that the subsystem performs as desired, the control system operates the associated equipment as efficiently as possible.

A large entity may have numerous buildings under common management, such as on a university campus or a chain of stores located in different cities. To accomplish this, the controllers in each building gather data regarding performance of the building subsystems so that the data can be analyzed at the central monitoring location.

With the cost of energy increasing, building owners are looking for ways to manage and conserve utility consumption. In addition, the cost of electricity for large consumers may be based on the peak use during a billing period. Thus, high consumption of electricity during a single day can affect the rate at which the service is billed during an entire month. Moreover, certain preferential rate plans require a customer to reduce consumption upon the request of the utility company, such as on days of large service demand throughout the entire utility distribution system. Failure to comply with the request usually results in stiff monetary penalties which raises the energy cost significantly above that for an unrestricted rate plan. Therefore, a consumer must have the ability to analyze energy usage to determine the best rate plan and implement processes to ensure that operation of the facility does not inappropriately cause an increase in utility costs.

The ability to analyze energy usage is particularly important for consumers that subscribe to a real-time pricing (RTP) structure. With an RTP structure, utility companies can adjust energy rates based on actual time-varying marginal costs, thereby providing an accurate and timely stimulus for encouraging customers to lower demand when marginal costs are high. To benefit from RTP, the consumer must have the ability to make short-term adjustments to curtail energy demand in response to periods with higher energy prices. One increasingly popular method of accomplishing this objective is by supplementing environmental conditioning systems with energy storage mediums, such as ice-storage systems. To maximize the benefits from such energy storage mediums, the consumer must have not only the ability to analyze energy demand and consumption information but also the ability to project future load requirements.

The ability to analyze energy or utility consumption is also of critical importance in identifying abnormal consumption. Abnormal energy or utility consumption may indicate malfunctioning equipment or other problems in the building. Therefore, monitoring utility usage and detecting abnormal consumption levels can indicate when maintenance or replacement of the machinery is required.

As a consequence, sensors are being incorporated into building management systems to measure utility usage for the entire building, as well as specific subsystems such as heating, ventilation and air conditioning equipment. These management systems collect and store massive quantities of utility use data which can be overwhelming to the facility operator when attempting to analyze that data in an effort to detect anomalies.

Alarm and warning systems and data visualization programs often are provided to assist in deriving meaningful information from the gathered data. With most such systems, however, human operators must select the thresholds for alarms and warnings, which is a daunting task. If the thresholds are too tight, then numerous false alarms are issued; and if the thresholds are too loose, equipment or system failures can go undetected. Although the data visualization programs can help building operators detect and diagnose problems, a large amount of time can be spent detecting problems. Also, the expertise of building operators varies greatly. New or inexperienced operators, in particular, may have difficulty detecting faults, and the performance of an operator may vary with the time of day or day of the week.

One example of an effort to overcome the aforementioned problems is represented by commonly-owned U. S. Patent Application 09/910,371 ("the '371 application"), filed July 20, 2001, which is hereby incorporated by reference. The '371 application provides a robust data analysis method that automatically determines if the current energy use is significantly different than previous energy patterns and, if so, alerts the building operator or mechanics to investigate and correct the problem. This is accomplished by reviewing the data for a given utility service to detect outliers, which are data samples that vary significantly from the majority of the data. The data related to that service is separated from all the data gathered by the associated building management system. That relevant data is then categorized based on the time periods during which the data was gathered.

As noted in the '371 application, utility consumption can vary widely from one day of the week to another. For example, a typical office building may have relatively high utility consumption Monday through Friday when most workers are present, and significantly lower consumption on weekends. In contrast, a manufacturing facility that operates seven days a week may have similar utility consumption every day. However, different manufacturing operations may be scheduled on different days of the week, thereby varying the level of utility consumption on a daily basis.

To account for the predictable weekly variations in utility consumption, the '371 application proposes that the building operator define one or more groups of days having similar utility consumption prior to implementing the outlier analysis. That grouping by the operator can be based on personal knowledge of the building use, or from visual analysis of data regarding daily average or peak utility consumption. Complicating this task, however, are the effects of seasonal trends in utility consumption. As persons skilled in the art will recognize, the power use in buildings can go through large variations during a change of season, such as when a building requires cooling in the spring.

Therefore there is a need for systems and methods that are capable of analyzing data pertaining to energy or other utility consumption to automatically determine days of the week having similar consumption profiles. There is further a need for such systems and methods that are not affected by seasonal variations in utility consumption.

## SUMMARY OF THE INVENTION

The present invention relates to systems and methods that analyze energy or other utility consumption information to automatically determine days of the week having similar consumption profiles. Such systems and methods have numerous applications. By way of example and not limitation, such systems and methods could be used to improve algorithms for forecasting or predicting future energy and electricity use, such as are commonly used in ice-storage systems. As another example, such systems or methods could be used to improve algorithms for predicting or detecting unusual electricity or utility consumption in buildings. As a further example, such systems and methods could be used to fill in missing energy or utility use data in building management systems that are adapted to utilize such information.

According to a first aspect of an embodiment of the present invention, a method is provided for determining days of the week with similar consumption of a utility by a computerized system. The method includes gathering data representative of utility consumption for a plurality of days. The method further includes analyzing the data to determine days of the week having similar utility consumption profiles.

According to another aspect of an embodiment of the present invention, a method is provided for determining days of the week with similar consumption of a utility by a computerized system. The method includes receiving a time series of utility use data spanning a plurality of days, and generating at least one feature of interest for each day in the time series. The method further includes transforming the at least one feature of interest for each day to remove any seasonal variation present therein, and grouping the features of interest by day of the week to define seven clusters. The method also includes identifying and removing outliers from the seven clusters for each feature of interest, and analyzing the seven clusters to determine days of the week with similar utility consumption profiles.

According to a further aspect of an embodiment of the present invention, an apparatus for determining days of the week with similar consumption of a utility includes a processor running a program. The program causes the processor to perform the steps of gathering time series data representative of utility consumption for a plurality of days, and analyzing the time series data to determine days of the week having similar utility consumption profiles.

According to yet another aspect of an embodiment of the present invention, an apparatus is provided for determining days of the week with similar consumption of a utility. The apparatus includes means for receiving a time series of utility use data spanning a plurality of days, and means for generating at least one feature of interest for each day in the time series. The apparatus further includes means for transforming the at least one feature of interest for each day to remove any seasonal variation present therein, and means for grouping the features of interest by day of the week to define seven clusters. The apparatus also includes means for identifying and removing outliers from the seven clusters for each feature of interest, and means for analyzing the seven clusters to determine days of the week with similar utility consumption profiles.

These and other benefits and features of embodiments of the invention will be apparent upon consideration of the following detailed description of preferred embodiments thereof, presented in connection with the following drawings in which like reference numerals are used to identify like elements throughout.

## BRIEF DESCRIPTION OF THE DRAWINGS

FIG. 1 is a block diagram of a distributed facility management system which incorporates the present invention.

FIG. 2 shows the major components of a pattern recognition system for determining days of the week with similar power consumption.

FIG. 3 is a flow chart for a form of an agglomerative clustering algorithm along with a stopping rule for determining the final number of clusters.

FIG. 4 is a time series graph of peak demand and average consumption data for a first building.

FIG. 5 is a time series graph of peak demand and average consumption data for a second building.

FIG. 6 is a time series graph of peak demand and average consumption data for a third building.

FIG. 7 is a time series graph of peak demand and transformed peak demand for the first building.

FIG. 8 shows box plots of the original and transformed peak demand for the first building.

FIG. 9 shows box plots of the original and transformed average consumption for the first building.

FIG. 10 shows Trellis plots of transformed peak demand versus transformed average consumption for normal data, one-dimensional outliers and two-dimensional outliers for the first building.

FIG. 11 shows plots of the final clusters for the first building.

FIG. 12 is a time series graph of peak demand and transformed peak demand for the second building.

FIG. 13 shows box plots of the original and transformed peak demand for the second building.

FIG. 14 shows box plots of the original and transformed average consumption for the second building.

FIG. 15 shows Trellis plots of transformed peak demand versus transformed average consumption for normal data, one-dimensional outliers and two-dimensional outliers for the second building.

FIG. 16 shows plots of the final clusters for the second building.

FIG. 17 is a time series graph of peak demand and transformed peak demand for the third building.

FIG. 18 shows box plots of the original and transformed peak demand for the third building.

FIG. 19 shows box plots of the original and transformed average consumption for the third building.

FIG. 20 shows Trellis plots of transformed peak demand versus transformed average consumption for normal data, one-dimensional outliers and two-dimensional outliers for the third building.

FIG. 21 shows plots of the final clusters for the third building.

Before explaining a number preferred embodiments of the invention in detail it is to be understood that the invention is not limited to the details of construction and the arrangement of the components set forth in the following description or illustrated in the drawings. The invention is capable of other embodiments or being practiced or carried out in various ways. It is also to be understood that the phraseology and terminology employed herein is for the purpose of description and should not be regarded as limiting.

## DETAILED DESCRIPTION OF THE PREFERRED EMBODIMENTS

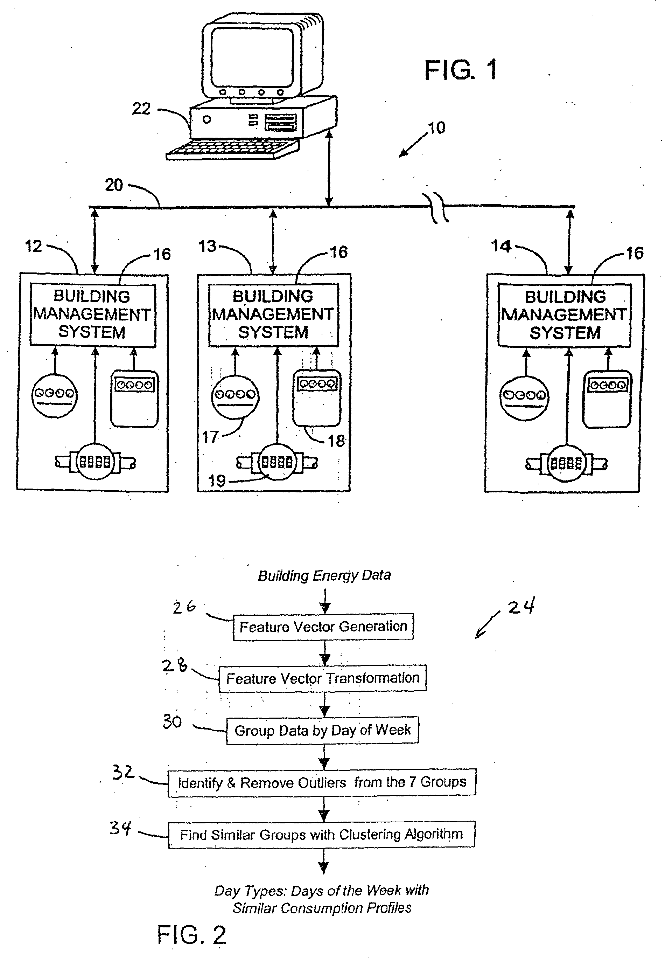

With reference to FIG. 1, a distributed facility management system 10 supervises the operation of systems in a plurality of buildings 12, 13 and 14. Each building contains its own building management system 16, which is a computer that governs the operation of various subsystems within the building. To facilitate this purpose, each building management system 16 is connected to numerous sensors positioned throughout the building to monitor consumption of different utility services at certain points of interest. For example, the building management system 16 in building 13 may be connected to a main electric meter 17, a central gas meter 18 and a main water meter 19. In addition, individual meters for electricity, gas, water and other utilities may be attached at the supply connection to specific pieces of equipment to measure their consumption. For example, water drawn into a cooling tower of an air conditioning system may be monitored, as well as the electric consumption of the pumps for that unit.

Periodically, building management system 10 gathers data from the various sensors and stores that information in a database contained within the memory of the computer for building management system 16. The frequency at which the data is gathered is determined by the operator of the building based on the type of the data and the associated building function. The utility consumption for functions with relatively steady state operation can be sampled less frequently, as compared to equipment having large variations in utility consumption.

The gathered data can be analyzed either locally by building management system 16 or forwarded via a communication link 20 for analysis by a centralized computer 22. Communication link 20 may be, for example, a wide area computer network extending among multiple buildings in an office park or on a university campus. Alternatively, communication link 20 may comprise telephone lines extending between individual stores and the main office of a large retailer spread throughout one or more cities and regions. If the analysis is to be performed locally, the system would typically utilize a local area network or direct cable connections for transmitting and receiving the gathered data between the various sensors, databases, computers, and other networked telecommunications equipment in the building management system 16.

The present invention relates to a process by which the data acquired from a given building is analyzed to determine days of the week having similar energy or other utility consumption profiles. FIG. 2 shows the major components of a pattern recognition system 24 in accordance with one embodiment of the present invention. Pattern recognition system 24 may be a program that is resident on building management system 16 or on centralized computer 22. In either case, the input to pattern recognition system 24 is a time series of building energy consumption data such as electricity use, natural gas consumption, district heating consumption, cooling requirements, heating requirements, and the like.

As illustrated in FIG. 2, pattern recognition system 24 begins with a feature vector generation block 26 that determines important energy consumption features from the time series of building energy data. Examples of important features are the average daily energy consumption, peak energy use during a fifteen-minute interval for a one-day period, or minimum energy use over a fifteen-minute interval for a one-day period. To remove the effect of seasonal energy changes, the features are transformed with a feature transformation block 28 which is described in detail below. After the features are transformed, the data is grouped into seven clusters (one cluster for each day of the week) by a grouping block 30 which also is described in detail below. Abnormal or unusual data for each cluster are identified using an outlier analysis block 32 that removes any detected outliers from the seven clusters. Finally, a cluster analysis block 34 determines days of the week with similar consumption to other days of the week.

Focusing on one type of utility service, such as electricity use for the entire building, the acquisition of periodic electric power measurements from the main electric meter 17 produces a set of data samples for every day of the week over an extended period of time, such as three or six months. Based on these data sets, pattern recognition system 24 is able to determine the days of the week having statistically similar electrical energy consumption profiles even when seasonal variation exists in the data samples. Although pattern recognition system 24 is described in the context of energy usage, it will be recognized that the system could be utilized in the context of numerous other utilities such as natural gas and water.

In feature vector generation block 26, the time series of energy use data is analyzed to generate important energy consumption features such as the average daily energy consumption and peak daily consumption over a one-hour period. Block 26 does not determine features for days when there is missing data or days that have an average or peak consumption of zero. For convenience, the features generated by block 26 may be represented by a vector $x_d$. For example, if there are two features then the feature vector $x_d$ for day $d$ is:

$$\mathbf{x}_d = \begin{bmatrix} f_{1,d} \\ f_{2,d} \end{bmatrix} \qquad (1)$$

where $f_{1,d}$ and $f_{2,d}$ are the first and second features for day $d$, respectively.

In feature vector transformation block 28, the data is transformed by determining the difference between the reading for a day and a one-week period of surrounding data. This helps prevent clusters for a day of the week from being split into two distinct groups when there is a change in power use resulting from seasonal variation. The following equation is used to transform the feature vector for day $d$:

$$\widetilde{\mathbf{x}}_d = \mathbf{x}_d - \frac{1}{7}\left(\mathbf{x}_{d-3} + \mathbf{x}_{d-2} + \mathbf{x}_{d-1} + \mathbf{x}_d + \mathbf{x}_{d+1} + \mathbf{x}_{d+2} + \mathbf{x}_{d+3}\right) \qquad (2)$$

where $\widetilde{x}_d$ is the transformed feature vector for day $d$, $x_d$ is the original feature vector for day $d$, $x_{d-3}$ is the reading for a feature for three days prior to day $d$, $x_{d-2}$ is the reading for a feature for two days prior to day $d$, $x_{d-1}$ is the reading for a feature for one day prior to day $d$, $x_{d+1}$ is the reading for a feature for one day after day $d$, $x_{d+2}$ is the reading for a feature for two days after day $d$, and $x_{d+3}$ is the reading for a feature for three days after day $d$. In the experimental results section below, Equation (2) was used to transform the data for average daily consumption and peak energy consumption during a fifteen-minute period to remove the seasonal variations from each building.

In grouping block 30, the transformed feature vectors $\widetilde{x}_d$ are grouped by day of the week. There are seven groups, and each group contains the feature vectors for one day of the week. For each group of data, block 30 uses only the most recent feature vectors. In the experimental results section below, the thirty most recent feature vectors were used to determine the day types for each building.

In outlier analysis block 32, the outliers are identified and removed for each of the seven groups. As those skilled in the art will recognize, outliers are values that are significantly different than the majority of values in a data set. For example, in the data set {4, 5, 3, 6, 2, 99, 1, 5, 7}, the number 99 may be considered an outlier. Numerous methods have been developed to identify outliers in both single and multiple dimensions. A preferred method of outlier detection for use in system 10 is based on the Generalized Extreme Studentized Deviate (GESD) statistical procedure described by B. Rosner, in "Percentage Points for a Generalized ESD Many-Outlier Procedure," <u>Technometrics,</u> Vol. 25, No. 2, pp. 165-172, May 1983. An application of the GESD method for identifying outliers in the specific context of analyzing electric power measurement data is provided in commonly owned U.S. Application No. 09/910,371, the entire content of which was incorporated by reference above.

The GESD method has two user selected parameters: the probability ($\alpha$) of incorrectly declaring one or more outliers when no outliers exist, and an upper bound ($n_u$) on the number of potential outliers. In the experimental results section below, the outliers were determined with $\alpha = 0.1$ and with $n_u$ set to the largest integer that satisfies the following inequality: $n_u \leq 0.5(n-1)$. This guideline for determining an upper bound ($n_u$) on the number of potential outliers is described by Carey et al., in "Resistant and Test-Based Outlier Rejection: Effects on Gaussian One- and Two-Sampled Inference," Technometrics, Vol. 93, No. 3, pp. 320-30, August 1997.

In outlier analysis block 32, the GESD method is used to identify the outliers for each feature in each of the seven groups. Thus, the GESD method is used multiple times to determine the outliers. For example, if there are two features in each feature vector, the GESD method is used fourteen times (2 features times 7 clusters) to the determine outliers. Similarly, if there are three features in each feature vector, the GESD method is used twenty-one times (3 features times 7 clusters) to the determine outliers. For each group, any outliers that are detected are removed from the data set by block 32.

In clustering block 34, a clustering analysis is used to find similar groups. One common method of cluster analysis is the agglomerative hierarchical clustering method. In traditional agglomerative hierarchical clustering, the number of initial clusters equals the number of observations (i.e., "feature vectors" in the illustrated embodiment). For identifying days of the week with similar consumption profiles, the number of initial clusters is seven (i.e., the number of groups) and there is more than one observation (or feature vector) in each cluster. Thus, the traditional agglomerative hierarchical clustering method is not appropriate for solving the problem at hand.

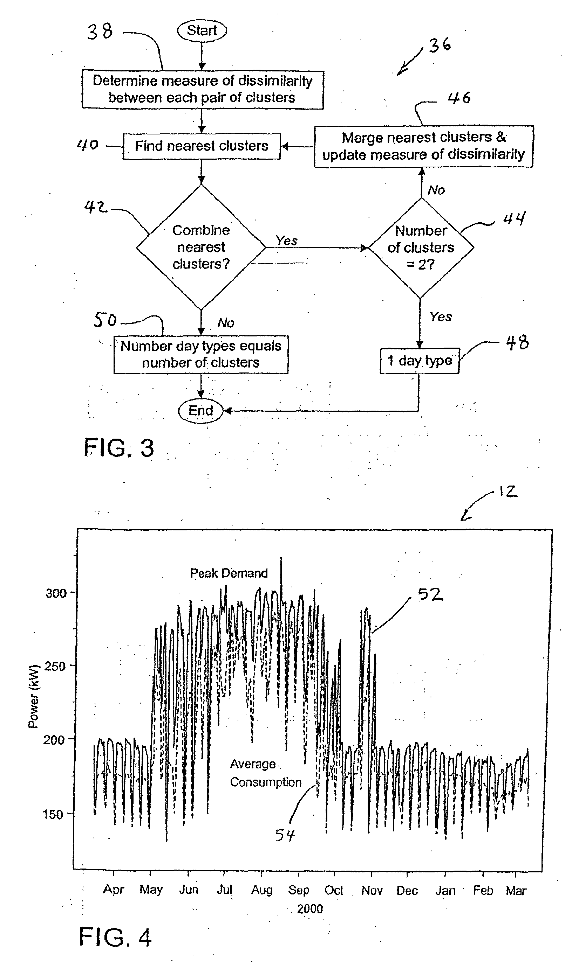

FIG. 3 is a flow chart for a revised form of the traditional agglomerative clustering along with a stopping rule for determining the final number of clusters. The revised clustering algorithm is indicated generally by reference numeral 36.

Clustering algorithm 36 commences at a step 38 by determining a measure of dissimilarity between each pair of clusters. Conventionally, a measure of dissimilarity between two clusters is known as a dissimilarity coefficient. If two clusters are close together, the dissimilarity coefficient is small; and if two clusters are far apart, the dissimilarity coefficient is large. Since there are seven clusters, there are twenty-one unique pairs of clusters and hence twenty-one dissimilarity coefficients: Mon-Tue, Mon-Wed, Mon-Thu, Mon-Fri, Mon-Sat, Mon-Sun, Tue-Wed, Tue-Thu, Tue-Fri, Tue-Sat, Tue-Sun, Wed-Thu, Wed-Fri, Wed-Sat, Wed-Sun, Thu-Fri, Thu-Sat, Thu-Sun, Fri-Sat, Fri-Sun, Sat-Sun.

The dissimilarity coefficient between two clusters can be defined by several different methods that are well known. One common method is the average linkage method. The average linkage method defines the dissimilarity coefficient between clusters $C_i$ and $C_j$ as the average distance between every pair of observations (or feature vectors), where one observation of the pair belongs to cluster $C_i$ and the other observation belongs to cluster $C_j$. In mathematical notation, the dissimilarity coefficient between clusters $C_i$ and $C_j$ is determined from:

$$d\left(C_i, C_j\right) = \frac{1}{n_i n_j} \sum_{x \in C_i} \sum_{y \in C_j} d(x, y) \qquad (3)$$

where $n_i$ is the number of observations (or feature vectors) in cluster $C_i$, $n_j$ is the number of observations in cluster $C_j$, and $d(\mathbf{x}, \mathbf{y})$ is the dissimilarity measure between observations $\mathbf{x}$ and $\mathbf{y}$. A common dissimilarity measure between observations (or feature vectors) $x$ and $y$ is the Euclidean distance:

$$d(x,y) = \sqrt{(x_1 - y_1)^2 + (x_2 - y_2)^2 + ... + (x_p - y_p)^2} \qquad (4)$$

where $x_i$ is the value of the $i^{th}$ variable of observation $\mathbf{x}$. In vector notation, the Euclidean distance between observations $\mathbf{x}$ and $\mathbf{y}$ is:

$$d(x,y) = \sqrt{(x-y)^T (x-y)} \qquad (5)$$

where $T$ indicates the transpose of vector ($\mathbf{x} - \mathbf{y}$).

Clustering algorithm 36 continues at a step 40 by finding the nearest clusters among all possible pairs of clusters. This is done by finding the pair of clusters that is most similar in terms of the measurement of dissimilarity between clusters.

At a step 42, clustering algorithm 36 determines whether the nearest clusters should be combined. This may be done by utilizing a stopping rule. A stopping rule is a method for determining the best number of clusters. There are numerous stopping rules known in the art of clustering analysis. A disadvantage of some stopping rules is they are unable to determine if there should be only one cluster. According to one known stopping rule that is capable of determining one or more clusters, the nearest clusters (e.g., assumed to be clusters $C_i$ and $C_j$ for convenience) should be joined if the following inequality is satisfied:

$$z > \frac{1 - \dfrac{2}{\pi \, n_{features}} - \dfrac{SS_i + SS_j}{SS_{i \cup j}}}{\sqrt{\dfrac{2[1 - 8/(\pi^2 \, n_{features})]}{(n_i + n_j) \, n_{features}}}} \tag{6}$$

where z is a critical value from a standard normal distribution, $n_{features}$ is the number of features, $n_i$ and $n_j$ are the number of observations (or feature vectors) in clusters $C_i$ and $C_j$, respectively, $SS_i$ and $SS_j$ are the sum of squared distance from the mean for clusters $C_i$ and $C_j$, respectively, and $SS_{i \cup j}$ is the sum of squared distances from the mean when cluster $C_i$ is combined with cluster $C_j$. The sum of squared distance from the mean for cluster C is determined from:

$$SS = \sum_{\mathbf{x} \in C} (\mathbf{x} - \overline{\mathbf{x}})' (\mathbf{x} - \overline{\mathbf{x}}) \tag{7}$$

where $\overline{\mathbf{x}}$ is the mean vector for cluster $C$. The sample mean can be determined with:

$$\overline{\mathbf{x}} = \frac{1}{n} \sum_{\mathbf{x} \in C} \mathbf{x} \tag{8}$$

where n is the number of observations (or feature vectors) in cluster $C$.

According to clustering algorithm 36, if the nearest clusters $C_i$ and $C_j$ should be joined, and there are three or more clusters remaining as determined by a step 44, then a step 46 is performed. In step 46, the nearest clusters $C_i$ and $C_j$ are combined, after which a new dissimilarity coefficient is determined between the combined cluster $C_i \cup C_j$ and each remaining cluster. The new dissimilarity coefficient(s) in step 46 can be determined by using the following known updating equation:

$$d(C_i \cup C_j, C_k) = \frac{n_i}{n_i + n_j} \, d(C_i, C_k) + \frac{n_j}{n_i + n_j} \, d(C_j, C_k) \tag{9}$$

for each remaining cluster $C_k$. After step 46, the flow returns to step 40.

If the nearest clusters $C_i$ and $C_j$ should be joined as determined by step 42, and there are only two remaining clusters $C_i$ and $C_j$ as determined by step 44, then the number of day types is set to one by a step 48.

If, on the other hand, step 42 determines that clusters $C_i$ and $C_j$ should not be joined, then the number of day types is set to the number of remaining clusters in a step 50.

Now that the details of pattern recognition system 24 and its associated method of operation have been fully described, the results of actual field tests conducted in several different buildings will be described. Although the field test results presented below are taken from only three different buildings, it should be noted that data from over 40 buildings in North America were used to test and validate the pattern recognition algorithm described above.

FIGS. 4, 5 and 6 show time series graphs 52-62 of the peak consumption (e.g., solid lines 52, 56 and 60) over a fifteen-minute period and the average daily consumption (e.g., dashed lines 54, 58 and 62) for buildings 12, 13 and 14, respectively. Notice that the baselines for the average and peak consumption in the illustrated field test results for buildings 12, 13 and 14 appear to change with the season. For buildings 12 and 13, the base consumption level is higher during the warmer months (May through September) than during the cooler season, possibly due to an increase in energy consumption resulting from mechanical cooling. In building 14, the opposite results are seen, i.e., the cooler season appears to exhibit a slightly higher base consumption level.

In the field tests, the energy consumption data underlying graphs 52-62 was analyzed by pattern recognition system 24 to determine the days of the week having similar consumption profiles. Table 1 summarizes the final results of this analysis for buildings 12, 13 and 14:

| Building Number | Number Of Final Clusters | Final Clusters |
|---|---|---|
| 12 | 2 | Weekdays & Weekends |
| 13 | 3 | Saturdays, Sundays, & Weekdays |
| 14 | 3 | Mondays, Weekends, & {Tuesdays, Wednesdays, Thursdays, & Fridays} |

In Table 1, the critical Z value (i.e., the stopping value) for combining clusters is 2. Thus, when $z_{stop}$ is less than 2, the nearest clusters are combined into one cluster. Notice that the final clusters are different for each of the three buildings.

Table 2 shows the nearest clusters, dissimilarity measure between clusters, and the right-hand side of inequality (5) (i.e., the stopping rule) during operation of clustering algorithm 36 for building 12:

| Number of Clusters | Nearest Clusters | | Dissimilarity Measure | $z_{stop}$ |
|---|---|---|---|---|
| 7 | Wed | Thu | 5.2 | -2.4 |
| 6 | Fri | Wed, Thu | 5.8 | -2.0 |
| 5 | Tue | Wed, Thu Fri | 6.5 | -3.5 |
| 4 | Mon | Tue, Wed, Thu, Fri | 8.1 | -1.4 |
| 3 | Sat | Sun | 26.0 | 1.5 |
| 2 | Sat, Sun | Mon, Tue, Wed, Thu, Fri | 40.4 | 6.6 |

In the data from building 12, the final clusters for a critical Z value of 2 are weekends (Sat & Sun) and weekdays (Mon, Tue, Wed, Thu, & Fri).

Table 3 shows the nearest clusters, the dissimilarity measure between clusters, and the right-hand side of inequality (5) during operation of clustering algorithm 36 for building 13:

| Number of Clusters | Nearest Clusters | | Dissimilarity Measure | $z_{stop}$ |
|---|---|---|---|---|
| 7 | Mon | Tue | 8.4 | -2.4 |
| 6 | Fri | Mon, Tue | 11.6 | -3.3 |
| 5 | Thu | Mon, Tue, Fri | 12.8 | -3.7 |
| 4 | Wed | Mon, Tue, Thu, Fri | 15.3 | -4.3 |
| 3 | Sat | Mon, Tue, Wed, Thu, Fri | 33.5 | 2.5 |

In the data from building 13, the final clusters for a critical Z value of 2 are Saturdays, Sundays, and Weekdays (Mon, Tue, Wed, Thu, & Fri).

Table 4 shows the nearest clusters, the dissimilarity measure between clusters, and the right-hand side of inequality (5) during operation of clustering algorithm 36 for building 14:

| Number of Clusters | Nearest Clusters | | Dissimilarity Measure | $z_{stop}$ |
|---|---|---|---|---|
| 7 | Wed | Fri | 4.6758 | -2.2932 |
| 6 | Tue | Wed, Fri | 5.4663 | -3.1477 |
| 5 | Thu | Tue, Wed, Fri | 5.8964 | -4.0164 |
| 4 | Sat | Sun | 6.0515 | -2.2309 |
| 3 | Sat, Sun | Tue, Wed, Thu, Fri | 12.996 | 3.9469 |

In the data from building 14, the final clusters for a critical Z value of 2 are Mondays, Weekends (Sat & Sun) and {Tuesdays, Wednesdays, Thursdays, and Fridays}.

To give further insight into the operation of pattern recognition system 24, a number of supplemental graphs and plots were produced for each of the above-discussed field tests. It should be noted, however, that the supplemental graphs and plots presented below do not themselves form part of the pattern recognition system 24 but instead are provided merely for purposes of illustration.

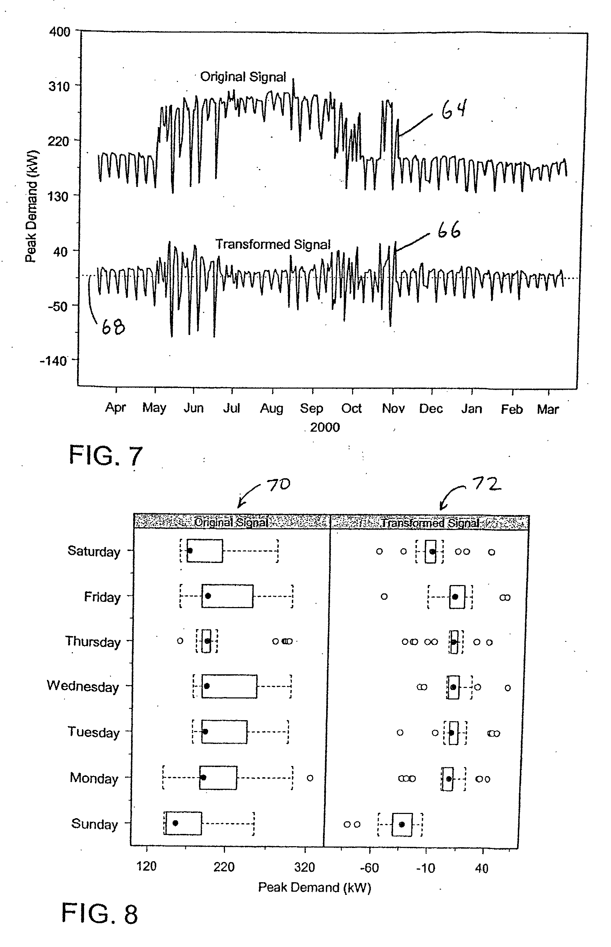

FIGS. 7-11 all relate to the consumption data associated with building 12. In FIG. 7, time series graphs 64 and 66 are representative of the original peak daily consumption (upper line) and the transformed peak daily consumption (lower line). As noted previously, the baseline for the original peak consumption (graph 64) appears to change with the season. The feature vector transformation block 28 described above removes this seasonal change in power consumption and results in the transformed consumption (graph 66) having a baseline 68 of zero.

FIG. 8 shows box plots 70 and 72 which are representative of the peak consumption for each day of the week for the original data (left column) and transformed data (right column), respectively, for building 12. Notice that inter-quartile range for the transformed data (box plots 72) is much smaller than the inter-quartile range for the original data (box plots 70). As a result, it is substantially easier to visually determine the days of the week having similar peak consumption profiles in the transformed data compared to the original data.

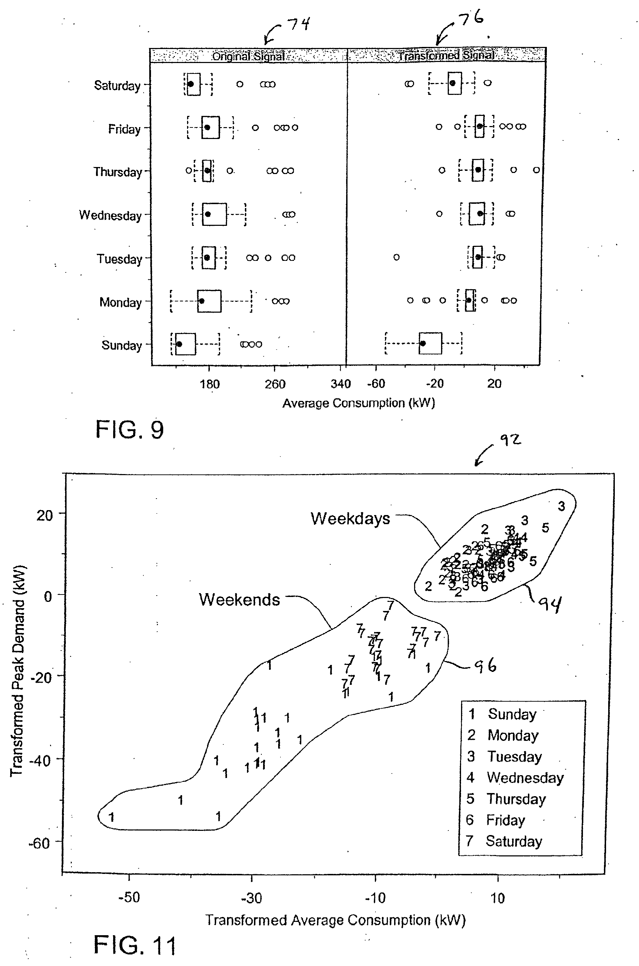

FIG. 9 shows similar box plots 74 and 76 which are representative of the average consumption for each day of the week for the original data (left column) and transformed data (right column), respectively, for building 12. Notice that the average consumption for all the weekdays in the transformed data (box plots 76) are similar. This pattern is significantly more difficult to detect in the original data (box plots 74).

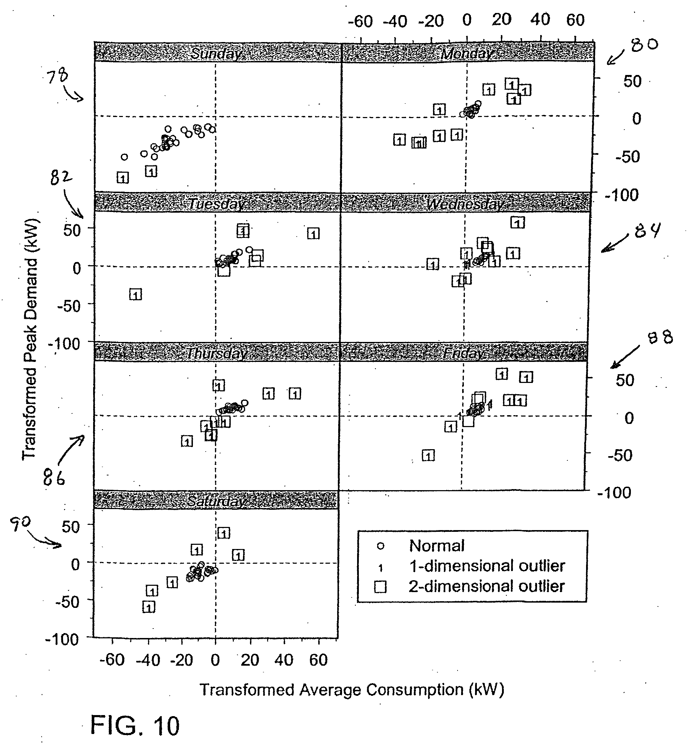

FIG. 10 shows Trellis plots 78-90 which are representative of transformed peak demand (vertical axes) versus transformed average consumption (horizontal axes) for normal observations (feature vectors), one-dimensional outliers, and two-dimensional outliers, for each day of the week for building 12. Notice that the plot for Friday (Trellis plot 88) contains three types of outliers: one-dimensional outliers, two-dimensional outliers, and observations (feature vectors) that are both one and two-dimensional outliers.

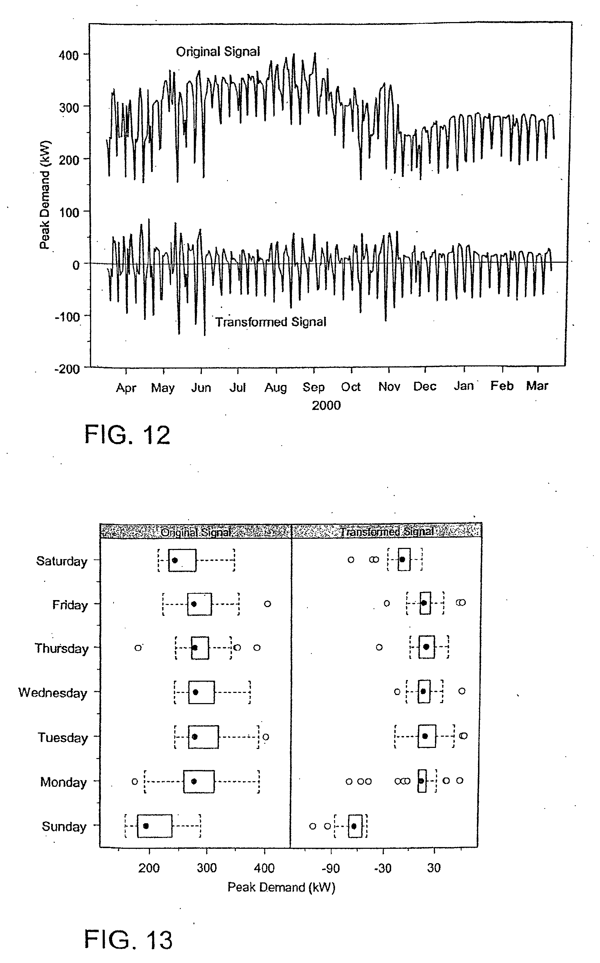

FIG. 11 is a scatter plot 92 that shows the final two clusters 94 and 96 corresponding to weekdays and weekends, respectively. Notice that there is no overlap between clusters 94 and 96.

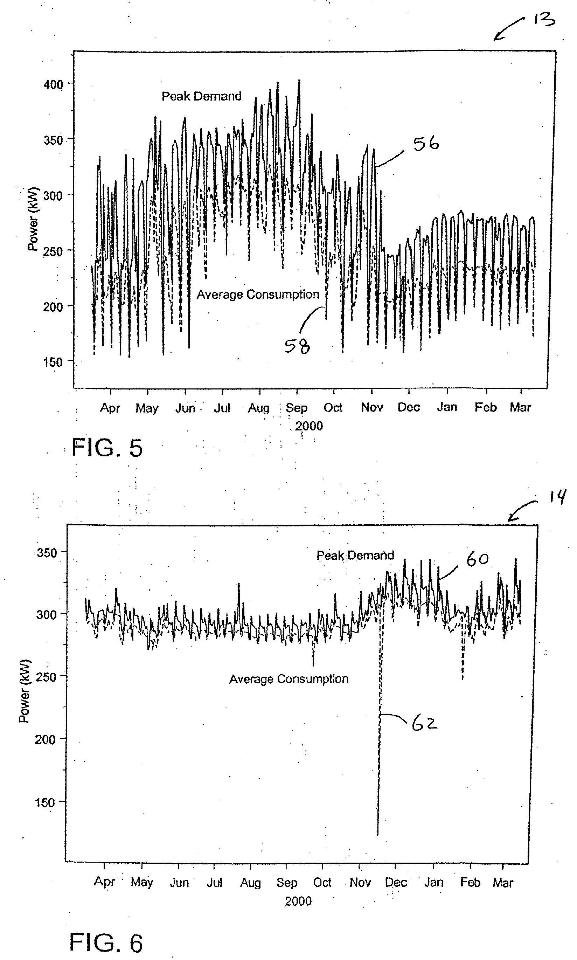

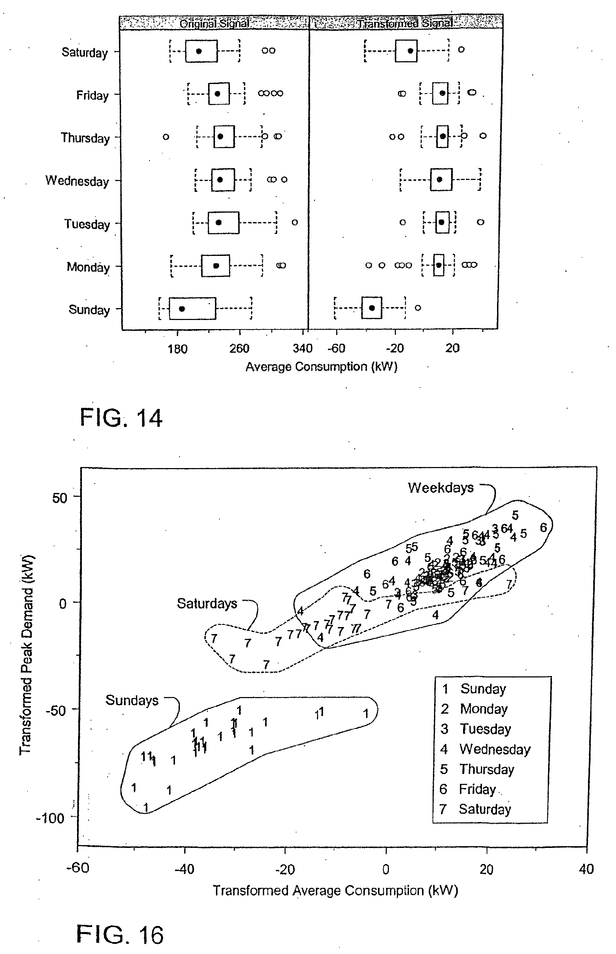

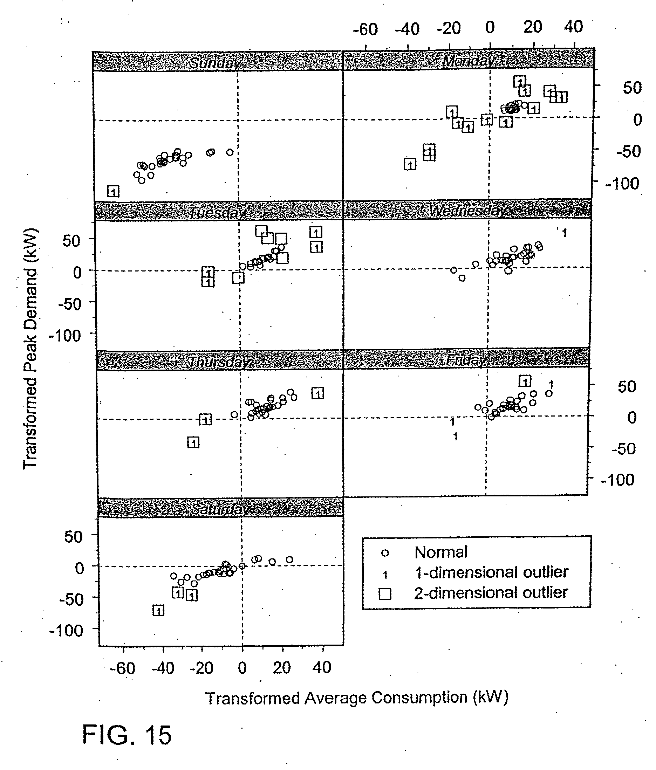

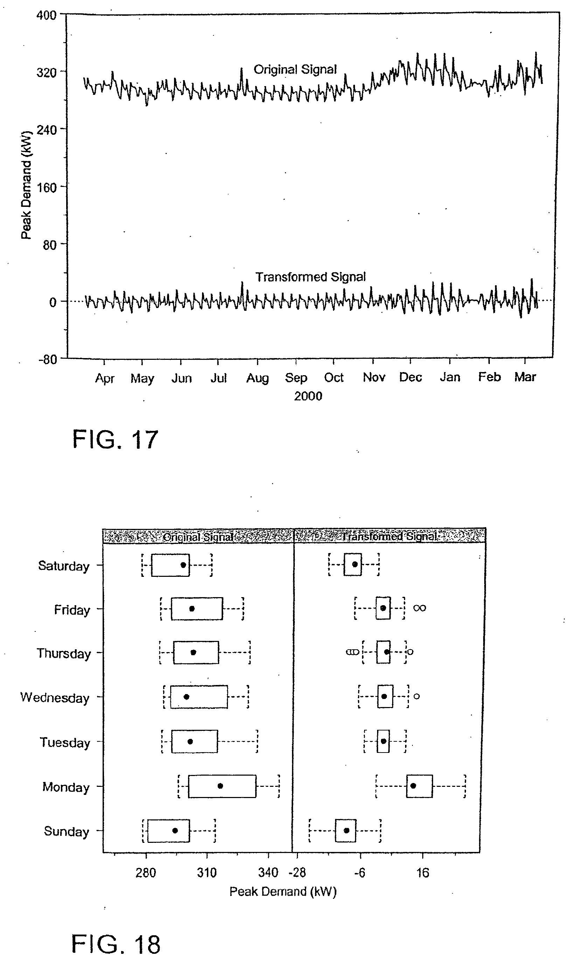

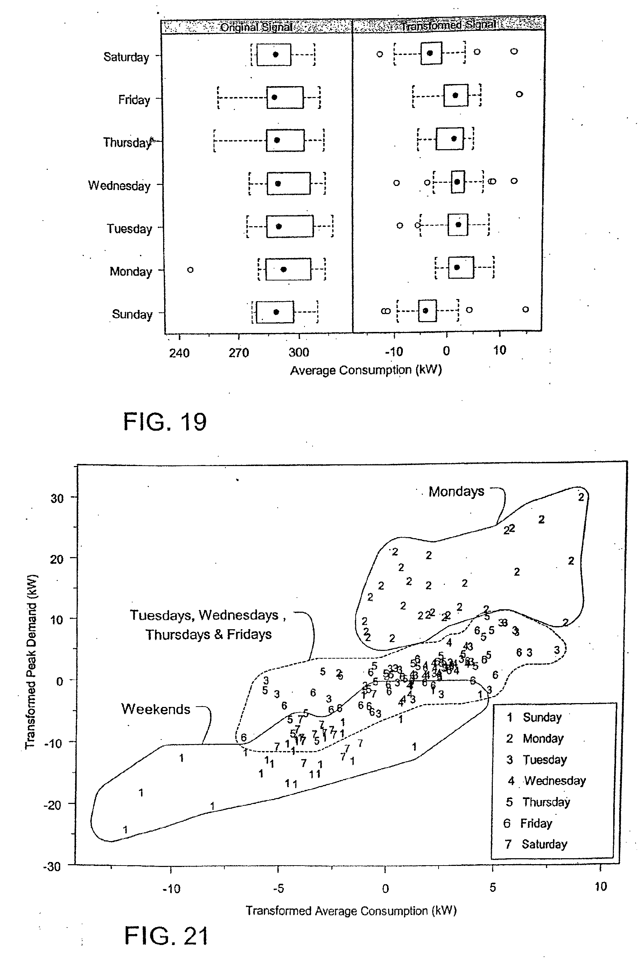

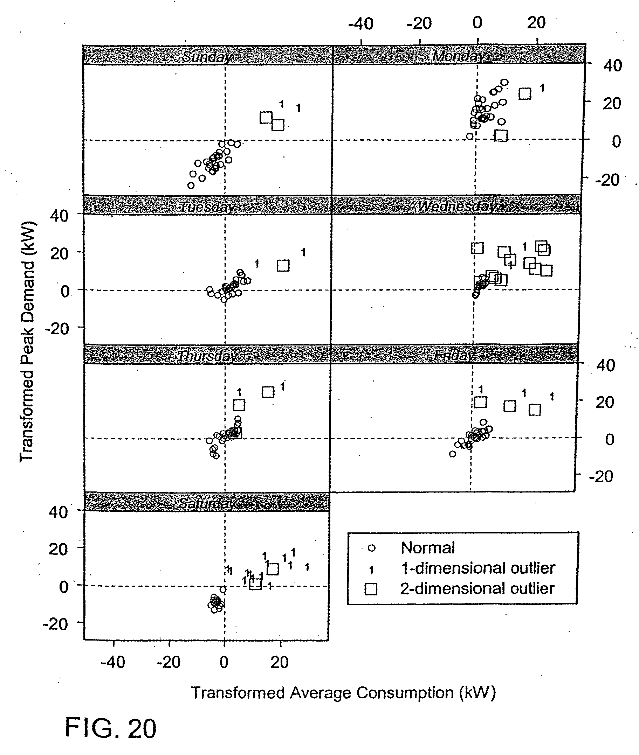

Similar graphs and plots can be seen in FIGS. 12-21. More specifically, FIGS. 12-16 generally correspond to FIGS. 5-11, respectively, except that they relate to consumption data associated with building 13 rather than building 12. Similarly, FIGS. 17-21 generally correspond to FIGS. 5-11, respectively, except that they relate to consumption data associated with building 14 rather than building 12.

It is important to note that the above-described preferred embodiments of the pattern recognition algorithm are illustrative only. Although the invention has been described in conjunction with specific embodiments thereof, those skilled in the art will appreciate that numerous modifications are possible without materially departing from the novel teachings and advantages of the subject matter described herein. For example, although the invention is illustrated using a particular method for outlier detection, a different outlier detection algorithm (or even no outlier detection algorithm) could be used. As another example, although the invention is illustrated using an agglomerative clustering method, a different clustering method could be used. Accordingly, these and all other such modifications are intended to be included within the scope of the present invention. Other substitutions, modifications, changes and omissions may be made in the design, operating conditions and arrangement of the preferred and other exemplary embodiments without departing from the spirit of the present invention.

**Claims**

1. A method for determining days of the week with similar consumption of a utility by a computerized system, comprising:

   gathering data representative of utility consumption for a plurality of days; and
   analyzing the data to determine days of the week having similar utility consumption profiles.

2. The method of claim 1, wherein the gathering step includes measuring the utility consumption using at least one sensor.

3. The method of claim 2, wherein the measuring step includes positioning the at least one sensor to monitor at least one of an electric meter, a gas meter, a water meter and a supply connection to a specific piece of equipment.

4. The method of claim 1, wherein the utility is at least one of electricity, gas and water.

5. The method of claim 1, wherein the gathering step includes reading the data from a database contained within a memory of the computerized system.

**6.** The method of claim 1, wherein the gathering step includes receiving the data via a communication link.

**7.** The method of claim 6, wherein the communication link is at least one of a direct cable connection, a local area network, a wide area network, and a telephone line.

**8.** The method of claim 1, wherein the data is a time series of building utility consumption data.

**9.** The method of claim 8, wherein the building utility consumption data is at least one of electricity use, natural gas consumption, district heating consumption, cooling requirements, and heating requirements.

**10.** The method claim 1, wherein the gathering step includes determining at least one predefined utility consumption feature for each day.

**11.** The method of claim 10, wherein the at least one predefined utility consumption feature for each day is selected from average daily utility consumption, peak utility use during a predefined time period for the day, and minimum utility use during a predefined time period for the day.

**12.** The method of claim 1, wherein the gathering step includes transforming the data to remove effects of seasonal change.

**13.** The method of claim 12, wherein the transforming step includes determining the difference between the data for a day and a one-week period of surrounding data.

**14.** The method of claim 13, wherein the determining step utilizes the following equation:

$$\widetilde{x}_d = x_d - \frac{1}{7}\left(x_{d-3} + x_{d-2} + x_{d-1} + x_d + x_{d+1} + x_{d+2} + x_{d+3}\right),$$

where $\widetilde{x}_d$ is the transformed data for day $d$, $x_d$ is the original data for day $d$, $x_{d-3}$ is the data for three days prior to day d, $x_{d-2}$ is the data for two days prior to day $d$, $x_{d-1}$ is the data for one day prior to day $d$, $x_{d+1}$ is the data for one day after day d, $x_{d+2}$ is the data for two days after day $d$, and $x_{d+3}$ is data for three days after day $d$.

**15.** The method of claim 1, wherein the gathering step includes identifying and removing abnormal utility consumption data.

**16.** The method of claim 15, wherein the identifying and removing step includes performing an outlier analysis on the data.

**17.** The method of claim 16, wherein the data includes N utility consumption features for each day, and the outlier analysis is performed N times for each day of the week.

**18.** The method of claim 16, wherein the outlier analysis is conducted using a Generalized Extreme Studentized Deviate (GESD) statistical procedure.

**19.** The method of claim 18, wherein the GESD statistical procedure utilizes two user selected parameters comprising:

a probability ($\alpha$) of incorrectly declaring one or more outliers when no outliers exist; and
an upper bound ($n_u$) on the number of potential outliers.

**20.** The method of claim 19, wherein the outliers are determined with $\alpha = 0.1$ and with $n_u$ set to the largest integer that satisfies the following inequality: $n_u \leq 0.5\,(n - 1)$.

**21.** The method of claim 1, wherein the analyzing step utilizes a clustering algorithm.

**22.** The method of claim 21, wherein the clustering algorithm comprises a form of an agglomerative hierarchical clustering method.

**23.** The method of claim 21, wherein the clustering algorithm commences by defining each day of the week as a separate cluster.

**24.** The method of claim 23, wherein the clustering algorithm continues by determining a measure of dissimilarity between each pair of clusters.

**25.** The method of claim 24, wherein the measure of dissimilarity between any two clusters is a dissimilarity coefficient.

**26.** The method of claim 25, further including defining the dissimilarity coefficient between the two clusters as the average distance between every pair of observations in the clusters, where one observation of the pair belongs to one cluster and the other observation belongs to the other cluster.

**27.** The method of claim 26, wherein the dissimilarity coefficient between each pair of clusters $C_i$ and $C_j$ is determined from:

$$d\left(C_i, C_j\right) = \frac{1}{n_i n_j} \sum_{x \in C_i} \sum_{y \in C_j} d(x, y)$$

where $n_i$ is the number of observations in cluster $C_i$, $n_j$ is the number of observations in cluster $C_j$, and $d(\mathbf{x},\mathbf{y})$ is the dissimilarity measure between observations $x$ and $y$.

**28.** The method of claim 27, wherein the dissimilarity measure between observations $x$ and $y$ is the Euclidean distance:

$$d(x,y) = \sqrt{(x_1 - y_1)^2 + (x_2 - y_2)^2 + \ldots + (x_p - y_p)^2}$$

where $x_i$ is the value of the $i^{th}$ variable of observation $\mathbf{x}$.

**29.** The method of claim 23, wherein the clustering algorithm continues by finding a nearest pair of clusters among all possible pairs of clusters.

**30.** The method of claim 29, wherein the finding step comprises identifying the nearest pair of clusters using a measurement of dissimilarity between all possible pairs of clusters.

**31.** The method of claim 29, wherein the clustering algorithm utilizes a stopping rule for determining a final number of clusters.

**32.** The method of claim 29, wherein the clustering algorithm utilizes a stopping rule for determining whether the nearest pair of clusters should be joined into a combined cluster.

**33.** The method of claim 32, wherein the stopping rule determines that the nearest pair of clusters $C_i$ and $C_j$ should be joined if the following inequality is satisfied:

$$z > \frac{1 - \dfrac{2}{\pi\, n_{features}} - \dfrac{SS_i + SS_j}{SS_{i \cup j}}}{\sqrt{\dfrac{2[1 - 8/(\pi^2\, n_{features})]}{(n_i + n_j)\, n_{features}}}}$$

where $z$ is a critical value from a standard normal distribution, $n_{features}$ is the number of features, $n_i$ and $n_j$ are the number of observations in clusters $C_i$ and $C_j$, respectively, $SS_i$ and $SS_j$ are a sum of squared distance from a mean for clusters $C_i$ and $C_j$, respectively, and $SS_{i \cup j}$ is a sum of squared distances from a mean when cluster $C_i$ is combined with cluster $C_j$.

**34.** The method of claim 32, further including, if the stopping rule determines that the nearest clusters should be joined, combining the nearest pair of clusters into a combined cluster.

35. The method of claim 34, further including, if the stopping rule determines that the nearest clusters should be joined, updating a dissimilarity coefficient between the combined cluster and each remaining cluster using the following updating equation:

$$\mathrm{d}(C_i \cup C_j, C_k) = \frac{n_i}{n_i + n_j} \, \mathrm{d}(C_i, C_k) + \frac{n_j}{n_i + n_j} \, \mathrm{d}(C_j, C_k)$$

wherein $C_i \cup C_j$ is the combined cluster and $C_k$ is the remaining cluster.

36. The method of claim 32, further including, if the stopping rule determines that the nearest clusters should be joined and there are two clusters remaining, setting a number of day types to one.

37. The method of claim 32, further including, if the stopping rule determines that the nearest clusters should not be joined, setting a number of day types to the number of remaining clusters.

38. An apparatus for determining days of the week with similar consumption of a utility, comprising:

   a processor running a program to perform the steps of:

      gathering time series data representative of utility consumption for a plurality of days; and
      analyzing the time series data to determine days of the week having similar utility consumption profiles.

39. The apparatus of claim 38, wherein the apparatus includes a memory containing the time series data, and to perform the gathering step, the program causes the processor to read the time series data from the memory.

40. The apparatus of claim 38, wherein the apparatus is connected by a communication link to a source containing the time series data, and to perform the gathering step, the program causes the processor to receive the time series data from the source.

41. The apparatus claim 38, wherein to perform the gathering step, the program causes the processor to generate at least one feature of interest for each day in the time series data.

42. The apparatus of claim 38, wherein to perform the gathering step, the program causes the processor to transform the time series data to remove effects of seasonal change.

43. The apparatus of claim 42, wherein to remove the effects of seasonal change from the time series data, the program causes the processor to determine the difference between the data for a day and a one-week period of surrounding data.

44. The apparatus of claim 38, wherein to perform the gathering step, the program causes the processor to identify and remove abnormal utility consumption data.

45. The apparatus of claim 44, wherein to identify and remove abnormal utility consumption data, the program causes the processor to perform an outlier analysis.

46. The apparatus of claim 38, wherein to perform the analyzing step, the program causes the processor to perform a clustering algorithm.

47. The apparatus of claim 46, wherein to perform the clustering algorithm, the program causes the processor to perform the steps of:

      defining the data for each day of the week as a separate cluster;
      determining a measure of dissimilarity between each pair of clusters;
      combining a nearest pair of clusters and updating the dissimilarity measures when a stopping rule indicates the nearest pair of clusters should be combined; and

terminating when the stopping rule indicates the nearest clusters should not be combined or the number of clusters equals one.

FIG. 1

Building Energy Data

Feature Vector Generation

Feature Vector Transformation

Group Data by Day of Week

Identify & Remove Outliers from the 7 Groups

Find Similar Groups with Clustering Algorithm

Day Types: Days of the Week with
Similar Consumption Profiles

FIG. 2

*38*

**Start**

Determine measure of dissimilarity between each pair of clusters

*36*

*46*

Merge nearest clusters & update measure of dissimilarity

*40* — Find nearest clusters

*No*

*42*

Combine nearest clusters?

*Yes*

*44*

Number of clusters = 2?

*50*

*No*

Number day types equals number of clusters

*Yes*

*48*

1 day type

**End**

## FIG. 3

*12*

Peak Demand

*52*

Average Consumption

*54*

Power (kW) — 300, 250, 200, 150

Apr May Jun Jul Aug Sep Oct Nov Dec Jan Feb Mar

2000

## FIG. 4

FIG. 5

FIG. 6

FIG. 7

FIG. 8

FIG. 9

FIG. 11

FIG. 10

FIG. 12

FIG. 13

FIG. 14

FIG. 16

FIG. 15

FIG. 17

FIG. 18

FIG. 19

FIG. 21

FIG. 20